# NOUVEAU FASCICULE DE BREVET EUROPEEN

(11) **EP 2 013 116 B2**
(45) Date de publication et mention de la décision concernant l'opposition: **13.05.2020**
(45) Mention de la délivrance du brevet: 15.12.2010
(21) Numéro de dépôt: 07728201.0
(22) Date de dépôt: 17.04.2007
(51) Int. Cl.: B65D 85/804, A47J 31/40

(54) **CONDITIONNEMENT POUR L'INFUSION D'UNE MATIERE A INFUSER AVEC DEUX SENS SPECIFIQUES D'UTILISATION**
VERPACKUNG ZUM AUFBRÜHEN EINER AUFBRÜHBAREN SUBSTANZ MIT ZWEI SPEZIFISCHEN VERWENDUNGSRICHTUNGEN
PACKAGING FOR THE INFUSION OF AN INFUSIBLE SUBSTANCE WITH TWO SPECIFIC DIRECTIONS OF USE

(30) Priorité: 26.04.2006 FR 0651475
(43) Date de publication de la demande: 14.01.2009
(73) Titulaire: COMPAGNIE MEDITERRANEENNE DES CAFES S.A., 06510 Carros (FR)
(72) Inventeur: BLANC, Jean-Pierre, 06000 Nice (FR); FERRIER,Christian, 06000 Nice (FR)
(74) Mandataire: Decobert, Jean-Pascal
(86) Numéro de dépôt international: PCT/EP2007/053738
(87) Numéro de publication internationale: WO 2007/122144

(56) Documents cités:
- EP-A1- 1 273 528
- WO-A-02/28241
- WO-A1-02/28241
- FR-A1- 2 874 164
- FR-A1- 2 874 210
- US-A1- 2004 115 310

## Description

La présente invention concerne un dispositif comprenant un conditionnement pour l'infusion d'une matière à infuser.

Elle trouvera, en particulier, son application pour le conditionnement de café moulu ou de thé utilisable avec des machines utilisant des doses de café moulu ou de thé pré-emballées.

Le document FR A 2 709 737, au nom du déposant, décrit un conditionnement pour du café moulu, se présentant sous la forme de pastille formée de papier filtre qui renferme le café moulu. Le pourtour de la pastille est constitué d'un matériau suffisamment rigide pour faire office d'armature, de sorte que ladite pastille a une bonne tenue mécanique.

Quel que soit le sens d'utilisation, la même qualité de boisson est obtenue.

On connaît aussi le document FR 2 874 210 au nom du déposant décrivant un conditionnement pour du café moulu tel que précédemment décrit comportant un marquage pour identifier le type de conditionnement, par exemple le type de café moulu.

Le document EP-A-1 273 528 décrit une capsule souple fermée pour la préparation d'une boisson. La capsule possède deux faces ne laissant pas passer l'eau à la même pression. Seule une face de la capsule est apte à coopérer avec une tête d'injection d'eau. Cette capsule n'est pas réversible et donc pas utilisable dans les deux sens d'utilisation.

Aucun des documents ne décrit la possibilité d'obtenir deux qualités de boisson avec un seul et même conditionnement.

A cet effet, la présente invention propose un dispositif selon la revendication 1.

Par propriétés de filtration, il faut entendre : porosité, épaisseur, relief, type de matériau utilisé et toutes autres caractéristiques pouvant modifier les qualités de filtration d'une couche filtrante.

Les qualités de filtration d'une couche filtrante sont classiquement, définies par un temps de passage de l'eau.

Pour déterminer ce temps de passage, on utilise une pompe continue, une mouture précise, un poids défini de matière à infuser et seule une caractéristique comme la porosité de la couche filtrante varie.

Par exemple en utilisant une pompe de 16 bar, une mouture de café de finesse moyenne, un poids de 7g et en faisant varier la porosité de la couche filtrante, le rapport du temps de passage entre deux couches filtrantes peut varier de 1 à 4.

L'avantage de la présente invention est la possibilité d'obtenir une qualité de boisson différente selon le sens d'utilisation dudit conditionnement.

Le sens d'utilisation est choisi en fonction de la qualité de la boisson désirée par l'utilisateur ou un sens d'utilisation est préféré pour obtenir une boisson d'une certaine qualité.

Dans l'objectif de distinguer les deux couches filtrantes, le conditionnement comporte un marquage qui permet leur différenciation.

Avantageusement, le repère visuel est semblable au marquage spécifique porté par une face dudit conditionnement.

Dans un autre mode de réalisation, le dispositif peut comporter des moyens de lecture pour l'identification dudit marquage.

La tête d'injection d'eau peut comporter une tête de perforation si le conditionnement nécessite de tels moyens.

D'autres buts et avantages apparaîtront au cours de la description qui suit d'un mode préféré de réalisation de l'invention qui n'en est cependant pas limitatif.

Suivant des variantes préférées de l'invention, le conditonnement est tel :
que le rapport du temps de passage des deux couches filtrantes est compris entre 1 et 2, et avantageusement égal à 2,
que le rapport du temps de passage des deux couches filtrantes est compris entre 2 et 4, et avantageusement égal à 3,
qu'il comporte un marquage complémentaire sur l'autre face dudit conditionnement,
que ledit marquage est une couleur,
que les couches filtrantes sont formées à base de papier filtre,
que les deux couches filtrantes sont à base de papier filtre et sont solidaires chacune à une face d'un renfort périphérique portant ledit marquage.

Avantageusement, le repère visuel est une couleur semblable au marquage spécifique porté par une face dudit conditionnement.

Le dispositif de production de boissons par infusion d'une matière à infuser comporte avantageusement des moyens de lecture pour l'identification dudit marquage.

Avantageusement, les moyens de lecture se situent dans une glissière apte à coopérer avec ledit renfort périphérique et destiné à guider ledit conditionnement.

Préférentiellement, le dispositif comporte des moyens de commande destinés à adapter le fonctionnement dudit dispositif selon l'identification dudit marquage.

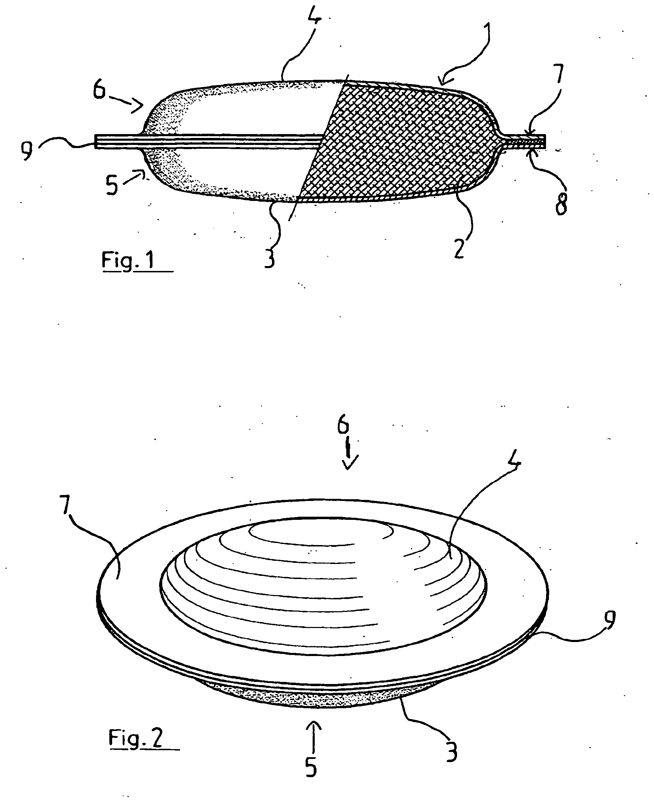

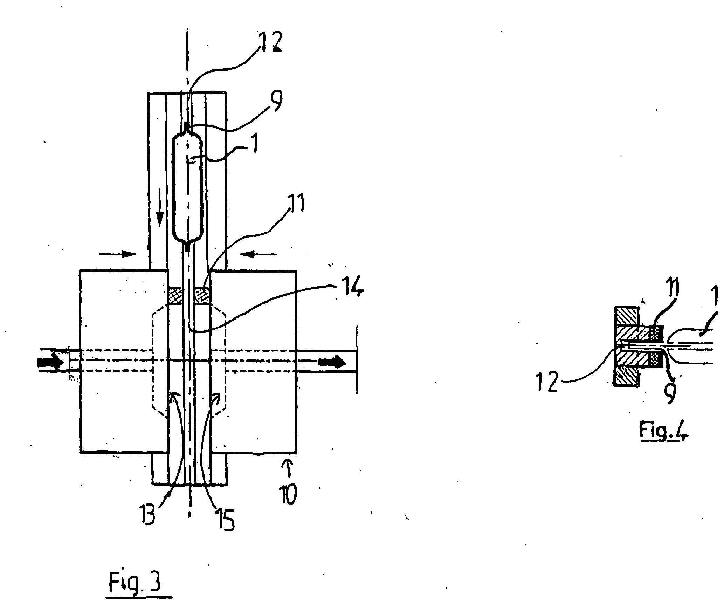

Les dessins ci-joints sont donnés à titre d'exemples et ne sont pas limitatifs de l'invention. Ils représentent seulement un mode de réalisation de l'invention et permettront de la comprendre aisément.
La Fig. figure 1 illustre partiellement de côté et partiellement en coupe, un conditionnement selon l'invention.
La Fig. figure 2 en donne une vue en perspective.
La Fig. figure 3 est une vue schématique du dispositif de l'invention en vue de côté.
La Fig. figure 4 est un exemple de configuration des moyens de lecture utilisables.

Le conditionnement 1 selon l'invention est constitué d'une couche inférieure 3 dont les propriétés de filtration sont différentes de celle de la couche supérieure 4. Les deux couches 3 et 4 délimitent un volume intérieur rempli d'une matière à infuser 2.

Les faces 5 et 6 dudit conditionnement 1 sont de forme sensiblement identique de manière à pouvoir coopérer dans les deux sens avec une tête d'injection d'eau 13.

A titre d'exemple, la matière à infuser 4 est de la mouture de café et les couches filtrantes 3 et 4 du conditionnement 1 sont à base de papier filtre.

Les deux couches préférentiellement à base de papier filtre 3 et 4 sont solidaires chacune à une face d'un renfort périphérique 9 destiné à donner une bonne tenue mécanique au conditionnement.

Les différences de filtration entre les deux couches 3 et 4 peuvent être distinguées par la mise en oeuvre de moyens de marquage pour identifier les deux faces 5 et 6 dudit conditionnement 1.

La face 6 comporte un marquage spécifique 7 et la face 5 peut ou non porter un marquage complémentaire 8.

Dans un mode de réalisation, le marquage spécifique 7 et le marquage complémentaire 8 sont constitués par une couleur prédéterminée. On entend par couleur, une nuance de couleur apte à être individualisée par l'utilisateur et/ou par des moyens de lecture 11.

Selon un mode de réalisation particulier, dans chaque série de conditionnement 1, le marquage spécifique 7 sera une couleur prédéterminée correspondant à une qualité de boisson particulière et le marquage complémentaire 8 sera identique pour toute la série. A titre d'exemple, le marquage spécifique 7 pourrait être bleu, rouge ou jaune et le marquage complémentaire 8 serait blanc quel que soit la couleur du marquage spécifique 7.

Avantageusement, le marquage spécifique 7 et le marquage complémentaire 8 sont portés par le renfort périphérique 9.

Le conditionnement 1 est utilisé dans un dispositif 10 de production de boissons par infusion d'une matière à infuser 2 comportant une tête d'injection d'eau 13 apte à coopérer avec les deux faces 5 et 6 dudit conditionnement 1.

Ledit conditionnement 1 est placé verticalement dans une glissière 12 verticale apte à coopérer avec le renfort périphérique 9 dudit conditionnement 1, la glissière 12 permet de guider ledit conditionnement 1 jusqu'à la chambre d'infusion 14. Celle-ci est constituée de deux pièces symétriques qui se rapprochent une fois le conditionnement présent dans la chambre d'infusion.

Une des deux pièces est la tête d'injection d'eau 13, par laquelle l'eau chaude arrive jusqu'au conditionnement 1. La tête d'injection d'eau a une forme concave permettant l'encastrement dudit conditionnement et peut être constituée d'une grille plus ou moins fine permettant le passage de l'eau chaude sur toute la surface dudit conditionnement 1. Elle peut aussi comporter une tête de perforation si le conditionnement nécessite de tels moyens.

L'autre pièce 15 de la chambre d'infusion a une forme concave identique à celle de la tête d'injection d'eau 13 pour pouvoir recevoir ledit conditionnement 1 dans ses deux sens d'utilisation. Cette pièce 15 permet l'écoulement de la boisson vers l'extérieur dudit dispositif 10.

Une fois l'utilisation du dispositif 10 finie, les deux pièces formant la chambre d'infusion 14, s'écartent et laissent tomber le conditionnement 1 vers un réceptacle récupérateur.

Les moyens de lecture 11 se situent de part et d'autres de la glissière 12, à un emplacement défini pour permettre la lecture des marquages 7 et 8 lorsque ledit conditionnement 1 est positionné dans la chambre d'infusion 14.

Dans un mode de réalisation particulier, les moyens de lecture 11 sont des moyens de reconnaissance d'au moins une couleur.

A titre d'exemple, les moyens de lecture comportent :
une diode apte à émettre une lumière avec un spectre fréquentiel prédéfini vers une zone cible du conditionnement 1,
un composant de détection apte à capter la lumière transmise ou réfléchie par le conditionnement et à l'interpréter pour identifier le marquage du conditionnement.

Les moyens de lecture 11 peuvent fonctionner de façon réfléchie c'est-à-dire en utilisant la surface cible du conditionnement 1 comme surface de réflexion pour la mesure de la lumière réfléchie ou de façon transmitive c'est-à-dire apte à détecter la lumière transmise au travers de son épaisseur. Dans ce dernier cas la diode et le composant de détection sont positionnés en vis-à-vis relativement à la glissière 12.

Une lecture par réflexion est plus adaptée si un marquage spécifique 7 et un marquage complémentaire 8 sont réalisés.

Les moyens de lecture étant formés dans la glissière 12 apte à coopérer avec ledit renfort périphérique 9 portant lesdits marquages 7 et 8 ledit conditionnement 1 peut être placé dans la glissière 12 dans les deux sens d'utilisation.

Selon un autre mode de réalisation, le conditionnement 1 pourrait être de forme cylindrique ou même cubique constitué de plastique ou de carton et dont deux faces sont filtrantes et de même structure extérieure de manière à permettre la production de boisson par infusion dans deux sens d'utilisation.

### 1 **er Exemple d'utilisation du dispositif

L'utilisateur prend le conditionnement 1 puis repère le marquage spécifique 7 porté par la face 6 du renfort périphérique 9. Le marquage complémentaire 8 est alors identique pour toutes les séries de conditionnement. Les marquages 7 et 8 étant avantageusement des couleurs, le marquage complémentaire 8 peut être la couleur blanche. L'utilisateur remarque ensuite le repère visuel présent sur le dispositif 10 et correspondant sensiblement à la couleur du marquage spécifique 7. Il peut alors introduire le conditionnement 1 dans le dispositif 10 de manière à avoir le marquage spécifique 7 du même côté que le repère visuel du dispositif 10.

De façon additionnelle, des moyens de lecture 11 dudit dispositif 10 peuvent détecter et identifier le marquage spécifique 7. Le dispositif 10 peut alors informer l'utilisateur par divers moyens d'avertissement, si le sens d'introduction du conditionnement 1 n'est pas le bon. Si le sens d'introduction est correct, le dispositif 10 adapte son fonctionnement en fonction du marquage spécifique 7 identifié.

### 2 **ème Exemple d'utilisation du dispositif

L'utilisateur prend le conditionnement 1 puis repère le marquage spécifique 7 porté par la face 6 du renfort périphérique 9 ainsi que le marquage complémentaire 8 porté par la face 5 du renfort périphérique 9.

Les marquages 7 et 8 étant avantageusement des couleurs, le marquage spécifique 7 est de couleur distincte du marquage complémentaire 8. L'utilisateur identifie la différence entre les deux marquages et choisi le type de boisson désirée. Si il veut la boisson correspondant au marquage spécifique 7 alors il introduit le conditionnement 1 dans le dispositif 10 de manière à avoir le marquage spécifique 7 face à lui.

Si l'utilisateur souhaite obtenir la boisson correspondant au marquage complémentaire 8 alors il introduit le conditionnement 1 dans le dispositif 10 de manière à avoir le marquage complémentaire 8 face à lui.

Les moyens de lecture 11 dudit dispositif 10 détectent alors soit le marquage spécifique 7, soit le marquage complémentaire 8, en informe l'utilisateur et adapte son fonctionnement en fonction du marquage identifié.

### REFERENCES

- 1.: Conditionnement
- 2.: Matière à infuser
- 3.: Couche inférieure filtrante
- 4.: Couche supérieure filtrante
- 5.: Face inférieure du conditionnement
- 6.: Face supérieure du conditionnement
- 7.: Marquage spécifique
- 8.: Marquage complémentaire
- 9.: Renfort périphérique
- 10.: Dispositif
- 11.: Moyens de lecture
- 12.: Glissière
- 13.: Tête d'injection
- 14.: Chambre d'infusion
- 15.: Pièce d'écoulement

## Revendications

1. Dispositif comprenant un conditionnement (1) pour l'infusion de matière à infuser (2) et un dispositif (10) de production de boissons par infusion d'une matière à infuser (2) comportant une tête d'injection d'eau (13), le conditionnement (1) comportant deux couches filtrantes (3) (4) de sorte à délimiter un volume de réception de la matière à infuser (2), lesdites couches filtrantes (3) (4) possédant des propriétés de filtration différentes et les faces (5) (6) du conditionnement (1) sont de forme sensiblement identique, le conditionnement étant configuré pour coopérer avec la tête d'injection d'eau (13) par l'une quelconque de ses faces (5) (6) de sorte à produire selon la face coopérant avec la tête d'injection d'eau (13) une boisson de qualité différente et le conditionnement (1) comportant un marquage spécifique (7) sur une face (6) dudit conditionnement pour différencier les deux faces,
le dispositif (10) de production de boissons par infusion d'une matière à infuser (2) comportant un repère visuel indiquant le sens d'utilisation du conditionnement relativement à la tête d'injection d'eau (13) de sorte à produire une qualité de boisson différente selon le sens d'utilisation du conditionnement (1) .

2. Dispositif selon la revendication 1 dans lequel le repère visuel est une couleur semblable au marquage spécifique (7) porté par une face du conditionnement (1).

3. Dispositif selon la revendication 1 ou 2 **caractérisé par le fait**
**que** le dispositif (10) de production de boissons comporte des moyens de lecture (11) pour l'identification dudit marquage (7) (8).

4. Dispositif selon la revendication 3 **caractérisé par le fait**
**que** les moyens de lecture (11) se situent dans une glissière (12) apte à coopérer avec ledit renfort périphérique (9) et destiné à guider ledit conditionnement (1).

5. Dispositif selon la revendication 4, le dispositif (10) de production de boissons comportant des moyens de commande destinés à adapter le fonctionnement dudit dispositif (10) selon l'identification dudit marquage (7) (8).

6. Dispositif selon l'une quelconque des revendications précédentes **caractérisé en ce que** le rapport du temps de passage des deux couches filtrantes est compris entre 1 et 2, et avantageusement égal à 2.

7. Dispositif selon l'une quelconque des revendications 1 à 5 **caractérisé en ce que** le rapport du temps de passage des deux couches filtrantes est compris entre 2 et 4, et avantageusement égal à 3.

8. Dispositif selon l'une quelconque des revendications précédentes **caractérisé en ce que** le conditionnement comporte un marquage complémentaire (8) sur l'autre face (5) dudit conditionnement (1).

9. Dispositif selon l'une quelconque des revendications précédentes **caractérisé en ce que** ledit marquage (7) (8) est une couleur.

10. Dispositif selon l'une quelconque des revendications précédentes **caractérisé en ce que** les couches filtrantes (3) (4) sont formées à base de papier filtre.

11. Dispositif selon l'une quelconque des revendications précédentes **caractérisé en ce que** les deux couches filtrantes sont à base de papier filtre (3) (4) et sont solidaires chacune à une face d'un renfort périphérique (9) portant ledit marquage (7) (8).

## Patentansprüche

1. Vorrichtung, die eine Verpackung (1) zum Brühen eines zu brühenden Stoffes (2) und eine Vorrichtung (10) zur Herstellung von Getränken durch Brühen eines zu brühenden Stoffes (2) mit einem Wassereinspritzkopf (13) besteht, wobei die Verpackung (1) mit zwei Filtereigenschaften (3) (4) umfasst, die ein Volumen zur Aufnahme des zu brühenden Stoffes (2) bilden, wobei die genannten Filtereigenschaften (3) (4) unterschiedliche Filtrationseigenschaften aufweisen und die Seiten (5) (6) der Verpackung (1) von etwa gleicher Form sind, die Verpackung über die Seiten (5) oder (6) mit einem Wassereinspritzkopf (13) zusammenwirken kann, um je nach der mit einem Wassereinspritzkopf (13) zusammenwirkenden Seite eine unterschiedliche Qualität des Getränks zu erzeugen, und eine Seite (6) der Verpackung eine spezifische Markierung (7) besitzt, durch welche sich die beiden Seiten unterscheiden,
die Vorrichtung (10) zur Herstellung von Getränken durch Brühen eines zu brühenden Stoffes (2), dass sie eine optische Markierung besitzt, die bei der Benutzung die Richtung der Verpackung in Bezug auf den Wassereinspritzkopf (13) angibt, um eine unterschiedliche Qualität des Getränks, nach der Benutzung die Richtung der Verpackung zu erzeugen.

2. Vorrichtung gemäß Patentanspruch 1, bei der die optische Markierung eine der spezifischen Markierung (7) auf einer Seite der Verpackung (1) ähnliche Farbe ist.

3. Vorrichtung nach Anspruch 1 oder 2, **gekennzeichnet dadurch, dass** die Vorrichtung (10) zur Herstellung von Getränken, dass sie Leseeinrichtungen (11) zur Erkennung der Markierung (7), (8) besitzt.

4. Vorrichtung gemäß Patentanspruch 3, **gekennzeichnet dadurch, dass** die Leseeinrichtungen (11) in einer Schiene (12) angeordnet sind, welche mit der Umfangsverstärkung (9) zusammenwirken kann und zur Führung der Verpackung (1) bestimmt ist.

5. Vorrichtung gemäß Patentanspruch 4, die Vorrichtung (10) zur Herstellung von Getränken mit Bedieneinrichtungen, mit denen die Funktionsweise der Vorrichtung (10) entsprechend der erkannten Markierung (7), (8) angepasst wird.

6. Vorrichtung gemäß einem der vorstehenden Patentansprüche, **gekennzeichnet dadurch, dass** das Verhältnis der Durchlaufzeit der beiden Filterschichten zwischen 1 und 2 liegt und vorteilhafterweise gleich 2 ist.

7. Vorrichtung gemäß einem der vorstehenden Patentansprüche 1 bis 5, **gekennzeichnet dadurch, dass** das Verhältnis der Durchlaufzeit der beiden Filterschichten zwischen 2 und 4 liegt und vorteilhafterweise gleich 3 ist.

8. Vorrichtung gemäß einem der vorstehenden Patentansprüche, die eine zusätzliche Markierung (8) auf der anderen Seite (5) der genannten Verpackung (1) besitzt.

9. Vorrichtung gemäß einem der vorstehenden Patentansprüche, **gekennzeichnet dadurch, dass** die genannte Markierung (7), (8) eine Farbe ist.

10. Vorrichtung gemäß einem der vorstehenden Patentansprüche, **gekennzeichnet dadurch, dass** die beiden Filterschichten (3), (4) aus Filterpapier bestehen.

11. Vorrichtung gemäß einem der vorstehenden Patentansprüche, **gekennzeichnet dadurch, dass** die beiden Filterschichten aus Filterpapier (3), (4) bestehen und jede mit einer Seite einer Randverstärkung (9) verbunden sind, auf der die genannte Markierung (7), (8) aufgebracht ist.

## Claims

1. Device comprising a package (1) for the infusion of a product to be infused (2) and a device (10) for producing drinks by infusing an infusion product to be infused (2) consisting of a water injection head (13), the package (1) comprising two filtering layers (3) (4) forming a volume to receive the product to be infused (2), the said filtering layers (3) (4) having different filtration properties and the faces (5) (6) of the package (1) being of roughly identical shape, the package is capable of coacting with a water injection head (13) with one or the other of its faces (5) (6) so as to produce according to the face cooperating with a water injection head (13) a different quality of drink and that it has a specific mark (7) on one face (6) of the said packaging in order to differentiate between the faces,
the device (10) for producing drinks for the infusion of a product to be infused (2) comprising a visual mark indicating the direction of use of the package relative to the water injection head (13) so as to produce a different quality of drink depending on the direction of use of the package (1).

2. Device according to claim 1 in which the visual mark is a colour similar to the specific marking (7) on one face of the package (1).

3. Device according to claim 1 or 2 **characterised in that** the device (10) for production drinks comprising reading means (11) for identifying the said marking (7) (8).

4. Device according to claim 3 **characterised in that** reading means (11) are placed in a slide (12) able to act with the said peripheral stiffener (9) to guide the said package (1).

5. Device according to claim 4, the device (10) for producing drinks with control means designed to adapt the functioning of the said device (10) in accordance with said marking (7) (8).

6. Device according to any one of the above claims **characterised in that** the ratio between the time for the passage through the two filtering layers is between 1 and 2, and advantageously equal to 2.

7. Device according to any one of claims 1 to 5 **characterised in that** the ratio between the time for the passage through the two filtering layers is between 2 and 4, and advantageously equal to 3.

8. Device according to any one of the above claims with additional marking (8) on the other face (5) of said package (1).

9. Device according to any one of the above claims **characterised in that** said marking (7) (8) is one colour.

10. Device according to any one of the above claims **characterised in that** filtering layers (3) (4) are formed from a base of filter paper.

11. Device according to any one of the above claims **characterised in that** the two filtering layers have a filter paper base (3) (4) and are joined each one to a peripheral stiffener (9) bearing the said marking (7) (8).
